# EUROPÄISCHE PATENTANMELDUNG

(11) **EP 1 523 055 A1**
(43) Veröffentlichungstag der Anmeldung: **13.04.2005**
(21) Anmeldenummer: 04029693.1
(22) Anmeldetag: 28.07.2001
(51) Int. Cl.: H01M 8/06

(54) **Brennstoffzellensystem**

(30) Priorität: 03.08.2000 DE 10037825
(62) Teilanmeldung aus: 01118215.1
(71) Anmelder: Ballard Power Systems AG, 73230 Kirchheim / Teck-Nabern (DE)
(72) Erfinder: Kaufmann, Lars, 73230 Kirchheim (DE)
(74) Vertreter: Beyer, Andreas, Dr.

(57) **Zusammenfassung**

Die Erfindung betrifft ein Brennstoffzellensystem mit einem Wärmetauscher (11) zum Vorwärmen eines Rohkraftstoff/Wassergemisches, mit einer Verdampfereinheit (9) zur Erzeugung eines gasförmigen Eduktgasstromes aus dem vorgewärmten Rohkraftstoff/Wassergemisch, mit einer Gaserzeugungseinheit (2) zur Herstellung eines wasserstoffreichen Gases aus dem Eduktgasstrom, mit einer gekühlten Gasreinigungseinheit zur selektiven Entfernung von Kohlenmonoxid aus dem wasserstoffreichen Gas, und mit zumindest einer Brennstoffzelle (4) zur Umsetzung des wasserstoffreichen, gereinigten Gases, wobei die zumindest eine Brennstoffzelle einen von dem gereinigten, wasserstoffreichen Gas durchströmten Anodenraum (6), einen von einem sauerstoffhaltigen Medium durchströmten Kathodenraum (5) und einen von einem Kühlmittel durchströmten Kühlraum (7) aufweist. Erfindungsgemäß weist die Gasreinigungseinheit eine separate Kühleinheit (14) auf, wobei der Wärmetauscher stromab des Kühlraumes im Kühlmittelstrom der Brennstoffzelle angeordnet und zur Beheizung von dem Kühlmittel beaufschlagt ist.

## Beschreibung

Die vorliegende Erfindung betrifft ein Brennstoffzellensystem nach dem Oberbegriff des Patentanspruchs 1.

Herkömmliche Brennstoffzellen verwenden als Brennstoff Wasserstoff, welcher in der Brennstoffzelle vorgeschalteten Stufen aus einem Gemisch aus einem flüssigen Kraftstoff, beispielsweise aus Methanol, und Wasser hergestellt wird. Da bei der Herstellung des Wasserstoffs üblicherweise auch für die Brennstoffzelle schädliches Kohlenmonoxid entsteht, wird zusätzlich noch eine Gasreinigungseinheit zwischengeschaltet, so dass eine Beaufschlagung der Anodenseite der Brennstoffzelle mit im Wesentlichen reinem Wasserstoff erfolgt. Weiterhin ist zum Verdampfen des Kraftstoffes beziehungsweise des Wassers eine Verdampfereinheit vorgesehen. Schließlich ist zur Vermeidung von Umweltbelastungen eine Abgasnachbehandlungseinheit vorgesehen, in der alle brennbaren Bestandteile der Brennstoffzellenabgase möglichst vollständig umgesetzt werden.

Ein gattungsgemäßes Brennstoffzellensystem ist aus der EP 861 802 A2 bekannt. Bei diesem Brennstoffzellensystem sind alle Teilsysteme, wie Vorwärmung für ein Kraftstoff/Wassergemisch, Verdampfer, Gaserzeugung, Gasreinigung und Abgasnachbehandlung in einer gemeinsamen Plattenanordnung integriert. Hierbei ist die Gasreinigung zur Abfuhr der dort anfallenden thermischen Energie benachbart zu der Vorwärmeinheit angeordnet.

Nachteilig bei diesem System ist die Tatsache, dass die von dem Kraftstoff/Wassergemisch aufnehmbare thermische Energie nicht in allen Betriebsbedingungen zur ausreichenden Kühlung der Gasreinigung ausreicht, so dass in der Brennstoffzelle noch unerwünschte Temperaturspitzen auftreten. Weiterhin ist nachteilig, dass das Kraftstoff/Wassergemisch bereits in der Vorwärmeinheit zumindest teilweise verdampft, so dass die Vorwärmeinheit von einem Phasengemisch aus flüssigem und gasförmigem Kraftstoff beziehungsweise Wasser durchströmt wird. Die Wärmekapazität des Kühlmediums hängt jedoch stark vom Phasenzustand ab, so dass in Bereichen mit gasförmigem Kühlmittel unter Umständen keine ausreichende Kühlleistung zur Verfügung steht und es somit örtlich zu Überhitzungen kommen kann.

Weiterhin ist aus der US 5,344,721 A1 ein Brennstoffzellensystem bekannt, bei dem Kraftstoff und Wasser separat zugeführt werden. Hierbei sind für den Kraftstoff und das Wasser separate Vorwärmeinheiten und Verdampfer vorgesehen. Somit werden bei dieser Anordnung eine Vielzahl von Bauteilen benötigt, was insbesondere bei mobilen Anwendungen im Hinblick auf den zur Verfügung stehenden Bauraum, Kosten und Gewicht nicht akzeptabel ist.

Die nachveröffentlichte WO 00/45456 offenbart eine Vorrichtung zum Verdampfen und/oder Überhitzen eines Kohlenwasserstoffs oder eines Kohlenwasserstoff/Wasser-Gemischs für ein Gaserzeugungssystem einer Brennstoffzellenanlage. Der Kohlenwasserstoff oder das Kohlenwasserstoff/Wasser-Gemisch durchströmt einen medienseitigen Bereich eines Wärmetauschers, der in wärmeleitender Verbindung mit einem wärmeträgerseitigen Bereich des Wärmetauschers steht. Der wärmeträgerseitige Bereich des Wärmetauschers wird durch Abgase eines Brenners beheizt, dem zur Verbrennung Anoden- und Kathodenabgas einer Brennstoffzelle sowie gegebenenfalls ein zusätzlicher Brennstoff zugeführt wird.

Die DE 195 45 186 A1 beschreibt eine Hochtemperatur-Brennstoffzellenanlage, die ein Hochtemperatur-Brennstoffzellenmodul sowie einen Reformer zur Reformierung eines Brenngases für das Hochtemperatur-Brennstoffzellenmodul aufweist. Dem Reformer wird ein kohlenwasserstoffhaltiger Brennstoff zugeführt, der entlang seines Strömungswegs zu dem Reformer in Wärmetauschern erwärmt und in einem Wassereinspritzer mit Wasserdampf befeuchtet wird. Die Wärmetauscher sind jeweils im Strömungsweg der Abgase eines Anodenteils des Hochtemperatur-Brennstoffzellenmoduls angeordnet, so dass die Anodenabgase in den Wärmetauschern einen Teil ihres Wärmeinhalts an den dem Reformern zuzuführenden kohlenwasserstoffhaltigen Brennstoff abgeben. Im Strömungsweg des Anodenabgases ist darüber hinaus ein Shift-Reaktor angeordnet, um in dem Anodenabgas enthaltenes Kohlenmonoxid und Wasser zu Kohlendioxid und Wasserstoff umzuwandeln.

Aufgabe der Erfindung ist die Bereitstellung eines Brennstoffzellensystems, welches kompakt aufgebaut ist, einen verbesserten Systemwirkungsgrad aufweist und einen zuverlässigen Wärmehaushalt sowohl für die Gasreinigungseinheit als auch für die Brennstoffzelle gewährleistet.

Diese Aufgabe wird gelöst durch ein Brennstoffzellensystem mit den Merkmalen des Patentanspruchs 1.

Durch eine Gasreinigungseinheit mit einer separaten Kühleinheit und einen Wärmetauscher zur Vorwärmung des Rohkraftstoff/Wassergemisches, der stromab eines Kühlraums einer Brennstoffzelle im Kühlmittelstrom der Brennstoffzelle angeordnet und zur Beheizung von dem Kühlmittel beaufschlagt ist, kann selbst bei Lastwechseln gewährleistet werden, dass das dem Anodenraum der Brennstoffzelle zugeführte wasserstoffreiche, gereinigte Gas eine für die Brennstoffzelle verträgliche Temperatur aufweist. Unzulässige Temperaturspitzen werden somit vermieden. Gleichzeitig wird die Beanspruchung, insbesondere auftretende Thermospannungen, der Verdampfereinheit durch den verringerten Temperaturgradient gesenkt. Dadurch kann die Lebensdauer und das dynamische Verhalten der Verdampfereinheit verbessert werden. Die Beaufschlagung des Wärmetauschers mit dem aus der Brennstoffzelle austretenden Kühlmittel weist den Vorteil auf, dass der Kühlmittelkreislauf der Brennstoffzelle entlastet wird, so dass ein zweiter Wärmetauscher weniger Wärmeenergie abführen muss. Dieser kann somit kleiner ausgeführt werden, was insbesondere bei mobilen Anwendungen wünschenswert ist.

Der Kühlmittelkreislauf der Brennstoffzelle kann außerdem auch zur Kühlung eines weiteren, als Reformatkühler ausgeführten Wärmetauschers verwendet werden. In diesem Fall kann es notwendig sein, zwischen die Vorwärmeinheit und den Reformatkühler noch einen weiteren, mit einem Kühlmedium beaufschlagten Wärmetauscher vorzusehen. Auch mit dieser Anordnung kann ein zuverlässiger Wärmehaushalt sowohl für die Gasreinigungseinheit, als auch für die Brennstoffzelle gewährleistet werden. Gleichzeitig wird durch die Vorwärmeinheit der Systemwirkungsgrad verbessert und die Belastung für die Verdampfereinheit reduziert.

Weitere Vorteile gehen aus den Unteransprüchen und der Beschreibung hervor. Die Erfindung wird nun anhand der beigefügten Zeichnung näher beschrieben. In dieser zeigt
- Fig. 1: ein erstes Ausführungsbeispiel eines vereinfachtes Blockschaltbildes eines Brennstoffzellensystems, das nicht Gegenstand der Erfindung ist und
- Fig. 2: ein zweites Ausführungsbeispiel eines vereinfachten Blockschaltbildes eines Brennstoffzellensystems.

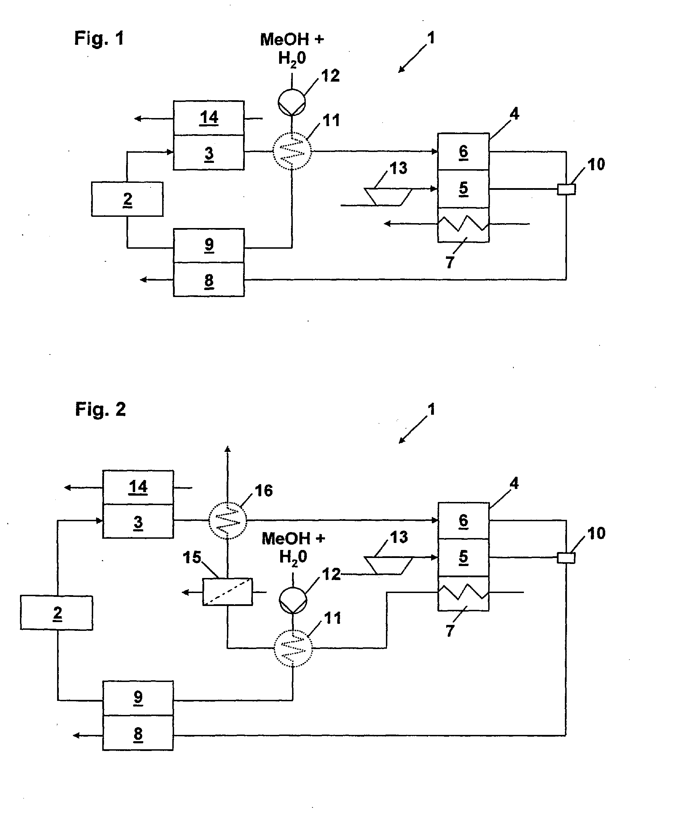

Das insgesamt mit 1 bezeichnete Brennstoffzellensystem gemäß Fig. 1 weist einen Wärmetauscher 11, eine Verdampfereinheit 9, eine Gaserzeugungseinheit 2, eine Gasreinigungseinheit 3, sowie eine Brennstoffzelle 4 mit einem Anodenraum 6, einem Kathodenraum 5 und einem Kühlraum 7 auf. Weiterhin ist eine katalytische Oxidationseinheit 8 vorgesehen. Mit Hilfe einer Dosierpumpe 12 wird ein Rohkraftstoff/Wassergemisch aus einem nicht dargestellten Vorratsbehälter gefördert. Das Rohkraftstoff/Wassergemisch wird in dem Wärmetauscher 11 vorgewärmt und anschließend in der Verdampfereinheit 9 verdampft, wobei die Verdampfereinheit 9 direkt oder indirekt durch die Oxidationseinheit 8 oder auf sonstige Weise beheizt wird. Das Rohkraftstoff/Wassergemisch wird in dem Wärmetauscher 11 durch thermischen Kontakt mit dem aus der Gasreinigungseinheit 3 austretenden wasserstoffreichen, gereinigten Gas erwärmt. Hierbei wird das wasserstoffreiche, gereinigte Gas gleichzeitig abgekühlt, so dass der Wärmetauscher 11 gleichzeitig die Funktion eines sogenannten Reformatkühlers übernimmt. Hierbei wird das wasserstoffreiche, gereinigte Gas auf für die Brennstoffzelle 4 geeignete Temperaturen abgekühlt.

In der Gaserzeugungseinheit 2 wird dann aus dem gasförmigen Kraftstoff/Wassergemisch und gegebenenfalls Luft mittels partieller Oxidation und/oder Wasserdampfreformierung ein wasserstoffreiches Gas erzeugt. Wird für die Gaserzeugungseinheit 2 eine Beheizung benötigt, so kann dies wiederum direkt oder indirekt über die Oxidationseinheit 8, durch thermischen Kontakt mit der Gasreinigungseinheit 3 oder in sonstiger Weise erfolgen. In dem wasserstoffreichen Gas ist üblicherweise auch Kohlenmonoxid enthalten, welches für die im Anodenraum 6 der Brennstoffzelle 4 vorhandenen Katalysatoren schädlich wirkt. Aus diesem Grund ist zwischen der Gaserzeugungseinheit 2 und dem Anodenraum 6 der Brennstoffzelle 4 eine Gasreinigungseinheit 3 vorgesehen. Hierbei handelt es sich vorzugsweise um eine Vorrichtung zur selektiven katalytischen Oxidation des Kohlenmonoxids unter Zugabe von Sauerstoff. Es können jedoch auch andere geeignete Gasreinigungseinheiten 3, beispielsweise eine Membranreinigungseinheit, verwendet werden. Die Gasreinigungseinheit 3 steht in thermischen Kontakt mit einer zugehörigen Kühleinheit 14. Diese Kühleinheit 14 kann beispielsweise mit Hilfe eines geeigneten Kühlmittels gekühlt werden. Alternativ ist es auch möglich, die Gasreinigungseinheit 3 durch Kontakt mit einer endothermen Reaktion zu kühlen. In diesem Falle kann beispielsweise die Kühleinheit 14 auch als Gaserzeugungseinheit ausgebildet sein, in der eine endotherme Wasserdampfreformierung abläuft. Durch die Kühleinheit 14 wird bereits ein großer Teil der thermischen Energie aus der Gasreinigungseinheit 3 abgeführt. Der Wärmetauscher 11 dient insbesondere zum Abfangen von Temperaturspitzen und stellt gleichzeitig eine thermische Sicherheitsreserve zum Schutz der Brennstoffzelle 4 dar.

Dem Kathodenraum 5 der Brennstoffzelle 4 wird mit Hilfe eines Verdichters 13 ein sauerstoffhaltiges Gas, vorzugsweise Umgebungsluft, unter Druck zugeführt. Alternativ kann der Brennstoffzelle 4 auch mit Hilfe eines Gebläses Umgebungsluft bei Umgebungsdruck zugeführt werden. Der Kühlraum 7 der Brennstoffzelle 4 wird von einem geeigneten Kühlmittel, vorzugsweise einem Wasser/Glykolgemisch, durchströmt. Dabei wird die Brennstoffzelle 4 auf einer vorgegebenen Betriebstemperatur gehalten. Das Ausführungsbeispiel zeigt lediglich den prinzipiellen Aufbau einer Brennstoffzelle 4. Der genaue Aufbau einer solchen Brennstoffzelle 4 beziehungsweise eines Brennstoffzellenstapels, sowie die geeignete Anordnung von einem oder mehreren Kühlräumen 7 ist aus dem Stand der Technik bekannt und wird daher hier nicht näher erläutert

Nach dem Durchströmen der Brennstoffzelle 4 wird das Anodenabgas mit der Abluft aus dem Kathodenraum 5 in einem Mischelement 10 gemischt und der katalytischen Oxidationseinheit 8 zugeführt. Dort werden an einem geeigneten Katalysator, vorzugsweise einem Edelmetallkatalysator, alle brennbaren Bestandteile der Brennstoffzellenabgase möglichst vollständig umgesetzt. Anstelle des Kathodenabgases kann auch ein anderes sauerstoffhaltiges Gas stromauf der katalytischen Oxidationseinheit 8 dem Anodenabgas beigemischt werden.

Selbstverständlich können die Verdampfereinheit 9, die Gaserzeugungseinheit 2, die Gasreinigungseinheit 3 oder sonstige Komponenten des Brennstoffzellensystems 1 auch mehrstufig ausgeführt werden.

Durch die Kombination einer Gasreinigungseinheit 3 mit separater Kühleinheit 14 und einem Wärmetauscher 11 zur Vorwärmung des Rohkraftstoff/Wassergemisches kann selbst bei Lastwechseln sichergestellt werden, dass sich das dem Anodenraum 6 der Brennstoffzelle 4 zugeführte wasserstoffreiche, gereinigte Gas auf einem für die Brennstoffzelle 4 erträglichen Temperaturniveau befindet. Unzulässige Temperaturspitzen werden somit vermieden. Gleichzeitig wird diese dem wasserstoffreichen, gereinigten Gas entzogene Energie dem Rohkraftstoff/Wassergemisch zugeführt. Dadurch verringert sich die erforderliche Verdampferleistung und der Systemwirkungsgrad wird verbessert. Ferner wird die Beanspruchung, insbesondere auftretende Thermospannungen, der Verdampfereinheit 9 durch den verringerten Temperaturgradient gesenkt. Dadurch kann die Lebensdauer und das dynamische Verhalten der Verdampfereinheit 9 verbessert werden. Im Vergleich zu Systemen mit getrennter Kraftstoff und Wasserzufuhr kann zumindest eine Vorwärmeinheit beziehungsweise eine Verdampfereinheit eingespart werden.

Ein Ausführungsbeispiel eines erfindungsgemäßen Brennstoffzellensystems zeigt Fig. 2, wobei gleiche Teile mit identischen Bezugszeichen gekennzeichnet sind. Abweichend von Fig. 1 wird in dieser Anordnung der Wärmetauscher 11 vom Kühlmittel der Brennstoffzelle 4 beaufschlagt, wobei das Kühlmittel dem Wärmetauscher 11 stromab des Kühlraums 7 zugeführt wird. In diesem Fall wird also das Rohkraftstoff/Wassergemisch anstelle durch das wasserstoffreiche, gereinigte Gas aus der Gasreinigungseinheit 3 durch das heiße Kühlmedium aus dem Kühlraum 7 vorgewärmt, bevor es in die Verdampfereinheit 9 geführt wird. Stromab des Wärmetauschers 11 ist in diesem Ausführungsbeispiel zusätzlich ein weiterer Wärmetauscher 15 im Kühlmittelstrom der Brennstoffzelle 4 angeordnet, welcher zusätzlich von einem Kühlmedium, vorzugsweise Umgebungsluft, beaufschlagt wird. Dadurch wird die Temperatur des Kühlmittels weiter verringert, bevor es anschließend in einen als sogenannter Reformatkühler dienenden dritten Wärmetauscher 16 eintritt. Durch diesen dritten Wärmetauscher 16 wird dann wiederum das aus der Gasreinigungseinheit 3 austretende wasserstoffreiche, gereinigte Gas vor dem Eintritt in den Anodenraum 6 auf eine für die Brennstoffzelle 4 erträgliche Temperatur gekühlt. Die Notwendigkeit für den zweiten Wärmetauscher 15 hängt von den Betriebsbedingungen im Brennstoffzellensystem ab. Falls das Kühlmittel nach dem Durchströmen des Wärmetauschers 11 bereits unter allen Betriebsbedingungen eine ausreichend niedere Temperatur aufweist, kann auf den zweiten Wärmetauscher 15 auch verzichtet werden.

Diese Anordnung weist den Vorteil auf, dass der Kühlmittelkreislauf der Brennstoffzelle 4 entlastet wird, so dass der zweite Wärmetauscher 15 weniger Wärmeenergie abführen muss. Dieser kann somit kleiner ausgeführt werden, was insbesondere bei mobilen Anwendungen wünschenswert ist. Gleichzeitig werden auch bei dieser Anordnung wiederum die thermischen Spannungen in der Verdampfereinheit 9 reduziert und der Systemwirkungsgrad verbessert.

## Patentansprüche

1. Brennstoffzellensystem (1) mit einem Wärmetauscher (11) zum Vorwärmen eines Rohkraftstoff/Wassergemisches, mit einer Verdampfereinheit (9) zur Erzeugung eines gasförmigen Eduktgasstromes aus dem vorgewärmten Rohkraftstoff/Wassergemisch, mit einer Gaserzeugungseinheit (2) zur Herstellung eines wasserstoffreichen Gases aus dem Eduktgasstrom, mit einer gekühlten Gasreinigungseinheit (3) zur selektiven Entfernung von Kohlenmonoxid aus dem wasserstoffreichen Gas, und mit zumindest einer Brennstoffzelle (4) zur Umsetzung des wasserstoffreichen, gereinigten Gases, wobei die zumindest eine Brennstoffzelle (4) einen von dem gereinigten, wasserstoffreichen Gas durchströmten Anodenraum (6), einen von einem sauerstoffhaltigen Medium durchströmten Kathodenraum (5) und einen von einem Kühlmittel durchströmten Kühlraum (7) aufweist,
**dadurch gekennzeichnet, dass** die Gasreinigungseinheit (3) eine separate Kühleinheit (14) aufweist, und dass der Wärmetauscher (11) stromab des Kühlraumes (7) im Kühlmittelstrom der Brennstoffzelle (4) angeordnet und zur Beheizung von dem Kühlmittel beaufschlagt ist.

2. Brennstoffzellensystem nach Anspruch 1,
**dadurch gekennzeichnet, dass** zusätzlich eine katalytische Oxidationseinheit (8) zur Bereitstellung von thermischer Energie vorgesehen ist, die in thermischen Kontakt mit der Verdampfereinheit (9) und gegebenenfalls mit der Gaserzeugungseinheit (2) steht, und die von den Abgasen aus dem Anoden- und dem Kathodenraum (6, 5) beaufschlagt ist.

3. Brennstoffzellensystem nach Anspruch 1,
**dadurch gekennzeichnet, dass** ein weiterer vom Kühlmittel beaufschlagter Wärmetauscher (16) zur Kühlung des gereinigten, wasserstoffreichen Gases aus der Gasreinigungseinheit (3) stromab des Wärmetauschers (11) angeordnet ist.

4. Brennstoffzellensystem nach Anspruch 3,
**dadurch gekennzeichnet, dass** im Kühlmittelstrom der Brennstoffzelle (4) zwischen dem Wärmetauscher (11) zur Vorwärmung des Rohkraftstoff/Wassergemisches und dem Wärmetauscher (16) zur Kühlung des gereinigten, wasserstoffreichen Gases ein weiterer, mit einem Kühlmedium beaufschlagter Wärmetauscher (15) vorgesehen ist.
